# DEMANDE DE BREVET EUROPEEN

(11) **EP 0 608 644 A1**
(43) Date de publication de la demande: **03.08.1994**
(21) Numéro de dépôt: 93400232.0
(22) Date de dépôt: 29.01.1993
(51) Int. Cl.: G01G 19/10

(54) **Procédé et dispositif de mesure de la charge à l'essieu d'un véhicule**

(71) Demandeur: Landais, Jean-Luc, F-44150 Ancenis (FR)
(72) Inventeur: Landais, Jean-Luc, F-44150 Ancenis (FR)
(74) Mandataire: Dawidowicz, Armand

(57) **Abrégé**

L'invention concerne un procédé et un dispositif de mesure de la charge à l'essieu pour des véhicules du type comportant une suspension hydraulique ou pneumatique reliant le châssis à l'essieu (3) et dans laquelle existent des éléments (1) dont la pression interne varie en fonction de la force d'appui du châssis sur l'essieu.

Le procédé selon l'invention est caractérisé en ce qu'on capte la pression régnant à l'intérieur d'au moins deux éléments (1) de la suspension disposés au voisinage des extrémités respectives de l'essieu (3), en ce qu'on mesure les pressions individuelles (P₁, P₂) de chacun des éléments (1) et en ce qu'on traduit la ou les valeurs de pression en un poids correspondant à la charge à l'essieu (3).

Application aux véhicules routiers.

## Description

La présente invention concerne un procédé de mesure de la charge à l'essieu pour des véhicules du type comportant une suspension hydraulique ou pneumatique reliant le châssis à l'essieu et dans laquelle existent des éléments dont la pression interne varie en fonction de la force d'appui du châssis sur l'essieu, ainsi qu'un dispositif mettant en oeuvre ce procédé.

Les charges à l'essieu des véhicules sont aujourd'hui normalisées en particulier pour des raisons de sécurité, car le déséquilibre d'un chargement ou la surcharge d'un véhicule peut avoir de graves conséquences sur la tenue de route de ce véhicule. Cependant, le transporteur n'a aucun moyen de vérifier si la charge à l'essieu est respectée au moment du chargement sauf s'il est équipé de bascules encombrantes, fixes ou mobiles, qui permettent, lors du passage du véhicule sur ces dernières de déterminer la charge pour chaque essieu. Cependant, cette mesure n'étant pas continue, elle oblige à procéder à une nouvelle mesure après rééquilibrage des charges d'où une perte de temps importante.

D'autres dispositifs sont également connus. Ainsi, le brevet allemand N° 1.549.286 décrit un dispositif d'affichage du poids de la charge d'un camion constitué d'un dispositif d'affichage et d'un élément tel qu'un vérin rempli d'un gaz ou d'un liquide dont le volume varie en fonction du fléchissement de ressorts disposés entre les essieux et le châssis et qui constituent la suspension du camion. En raison du type de suspension spécifique, à savoir une suspension mécanique à ressorts, on aboutit à un dispositif de mesure constitué par le déplacement d'un liquide ou d'un gaz. Ce dispositif est donc beaucoup plus complexe que le dispositif objet de l'invention.

Un autre brevet allemand N° 2.652.504 décrit également un dispositif d'affichage de la charge d'une plate-forme d'omnibus. L'installation comprend des moyens de raccordement des coussins d'air de la suspension pneumatique ou hydraulique à une vanne d'alimentation proportionnelle qui est elle-même reliée par l'intermédiaire d'un câble à un dispositif d'affichage. Dans ce type de montage, il n'est pas possible d'avoir une mesure de la charge à l'essieu mais uniquement une mesure de la charge totale.

Enfin, un dernier document, le brevet allemand N° 2.924.825, décrit une installation comprenant une suspension à ressorts combinés à des vérins disposés entre l'essieu et le châssis du véhicule et qui ont pour fonction de soulever ou d'abaisser le châssis par rapport à l'essieu pour ramener les ressorts de la suspension à une position préalablement définie. Ce système est peu fiable car la position de départ varie dans le temps en raison de l'usure des ressorts. En outre, ce dispositif est onéreux car il nécessite de rapporter des vérins sur le véhicule.

En conclusion, tous les dispositifs précités sont de construction complexe et ne permettent pas de mesurer directement la charge à l'essieu. Le but du procédé conforme à l'invention est donc de proposer un moyen de mesurer de manière continue la pression résultant de la charge au niveau d'un essieu et d'afficher pour une exploitation immédiate la pression mesurée ou le poids correspondant à la pression mesurée, la valeur affichée permettant de déterminer la valeur de la charge à l'essieu, mais également la valeur de la charge à chaque extrémité de l'essieu.

Le but du procédé conforme à l'invention est donc de proposer un moyen de mesurer de manière continue la pression résultant de la charge au niveau d'un essieu et d'afficher pour une exploitation immédiate la pression mesurée ou le poids correspondant à la pression mesurée, la valeur affichée permettant de déterminer la valeur de la charge à l'essieu.

Un autre but de l'invention est de proposer un dispositif mettant en oeuvre le procédé permettant d'obtenir à tout moment une mesure rapide et fiable de la pression correspondant à une charge à l'essieu particulière.

L'invention a à cet effet pour objet un procédé de mesure de la charge à l'essieu pour des véhicules du type comportant une suspension hydraulique ou pneumatique reliant le châssis à l'essieu et dans laquelle existent des éléments tels que des coussins d'air dont la pression interne varie en fonction de la force d'appui du châssis sur l'essieu, caractérisé en ce qu'on capte la pression régnant à l'intérieur d'au moins deux éléments de la suspension disposés au voisinage des extrémités respectives de l'essieu, en ce qu'on mesure les pressions individuelles, et en ce qu'on traduit les valeurs de pression individuelle et la pression moyenne en un poids correspondant d'une part à la charge aux extrémités de l'essieu, d'autre part à la charge totale à l'essieu.

L'invention concerne également un dispositif pour la mise en oeuvre du procédé, caractérisé en ce qu'il comprend des moyens de captation de la pression régnant dans au moins deux éléments de la suspension hydraulique ou pneumatique, des moyens de mesure des pressions captées indépendants pour la mesure à chaque extrémité de l'essieu, des moyens de traduction, des pressions individuelles ou de la pression moyenne mesurées, en poids.

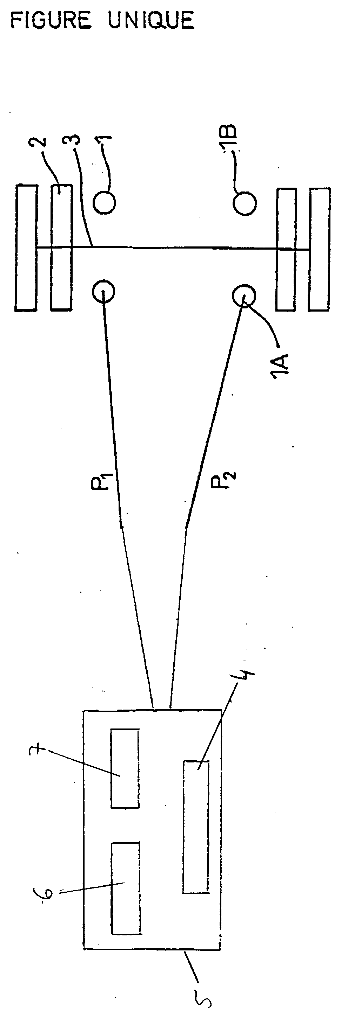

D'autres caractéristiques et avantages de l'invention apparaîtront encore à la lecture de la description détaillée qui suit et du dessin joint, lesquels description et dessin sont donnés surtout à titre d'exemple.

La figure unique représente un schéma simplifié d'un dispositif de mesure de la charge à l'essieu conforme à l'invention.

La mise en oeuvre du procédé conforme à l'invention est réalisée sur un véhicule équipé d'une suspension hydraulique ou pneumatique. Ladite suspension doit comporter des éléments à pression interne variable et dont la variation de pression est liée à une variation de la charge sur l'essieu 3. Généralement, dans une suspension pneumatique, les éléments répondant à cette définition sont les coussins pneumatiques ou coussins d'air 1 qui sont disposés à chacune des extrémités de l'essieu et dont la pression varie en fonction de la charge du châssis disposé au-dessus. Lorsqu'un essieu comporte quatre roues, la suspension comporte généralement quatre coussins d'air qui sont par couple (1A, 1B) à la même pression. Il suffit donc de capter la pression d'au moins deux de ces éléments qui seront obligatoirement disposés à chacune des extrémités de l'essieu. Dans l'exemple représenté, on a choisi les coussins d'air avant 1A disposés respectivement au voisinage des roues arrière droite et arrière gauche. Il est nécessaire de capter la mesure en deux endroits différents car la charge peut être disposée uniquement du côté de la roue arrière droite ou du côté de la roue arrière gauche, de telle sorte que, en fonction du positionnement du capteur, on obtiendra une pression quasi-nulle ou au contraire une pression correspondant à une surcharge. En conclusion, les endroits où la pression est captée sont au moins au nombre de deux et sont toujours disposés au voisinage de chacune des extrémités de l'essieu, le plus près de l'endroit où ce dernier prend appui au sol grâce aux roues 2. La pression captée au niveau de chacun des coussins d'air est mesurée directement au niveau de chaque coussin d'air et amenée à un dispositif d'affichage 5 où elle peut éventuellement être retraitée par la suite pour obtenir une valeur moyenne correspondant à l'ensemble de la charge. Ainsi, conformément à la figure unique, les coussins d'air 1A sont reliés par l'intermédiaire de branchements parallèles réalisés, par exemple à l'aide de tuyaux en matière plastique ou autre, directement au dispositif d'affichage 5. Ce dispositif d'affichage inclut des moyens de mesure de la pression tels que des capteurs et des moyens de conversion généralement électroniques de la pression mesurée en poids. Grâce à un tel montage, on peut afficher d'une part les poids correspondant aux pressions P₁ et P₂ mesurées qui fournissent une valeur de la charge respectivement côté droit et côté gauche, d'autre part la charge totale à l'essieu obtenue après calcul de la valeur moyenne des pressions P₁ et P₂.

Dans le cas d'une traduction directe, la pression mesurée est directement transformée en poids par des moyens de conversion, d'intégration et de calcul connus en soi et est affichée sous forme d'une valeur exprimée en kilogrammes. Dans ce cas également, les moyens d'affichage utilisés peuvent être quelconques.

La traduction est indirecte lorsque c'est la pression mesurée qui est affichée par le moyen d'affichage disposé au niveau du tableau de bord. Ce moyen d'affichage est quelconque et peut même être intégré à l'appareil de mesure de la pression comme c'est le cas avec un manomètre. Dans le cas d'une traduction indirecte, il faut donc également disposer d'un tableau comparatif pression-poids qui permet de savoir qu'à telle pression mesurée correspond une charge à l'essieu de X kilogrammes et une charge à l'extrémité droite ou gauche de l'essieu de Y ou Z kilogrammes. Grâce à cette indépendance des mesures P₁ et P₂, il est possible d'obtenir un grand nombre d'informations en réalisant une combinaison de ces mesures. Ainsi, il est possible d'une part d'afficher le poids côté droit de l'essieu, ou le poids côté gauche de l'essieu afin de vérifier si la charge est répartie de manière homogène sur l'essieu. En outre, il est possible de traiter à l'intérieur du dispositif d'affichage 5 lesdites informations pour obtenir la charge totale à l'essieu. Bien évidemment, ces mêmes mesures peuvent être répétées pour chaque essieu, fournissant ainsi des données très précises sur la répartition de la charge sur l'ensemble de la surface de la plateforme du véhicule. Un tel montage signifie qu'à un piquage de pression sur l'essieu correspond une entrée sur le dispositif d'affichage. Par la suite, des moyens électroniques peuvent permettre de sélectionner un essieu puis de visualiser sur cet essieu au niveau des cadrans d'affichage 6 et 7, le poids côté droit et le poids côté gauche de l'essieu puis en 4, la charge totale à l'essieu.

Il est à noter que n'importe quel dispositif d'affichage, n'importe quel dispositif de mesure de pression et n'importe quel dispositif de conversion de pression en poids ou de calcul d'une pression moyenne connus en soi peuvent être utilisés sans sortir du cadre de l'invention.

Bien évidemment, pour chaque type de véhicule, il est nécessaire d'étalonner et d'adapter le dispositif car les suspensions réagissent différemment d'un type de véhicule à un autre. A titre d'exemple, on peut avoir le tableau de comparaison pression/charge à l'essieu suivant :

| Pression en bars | Charge à l'essieu en tonnes |
|---|---|
| 5,5 | 10,500 |
| 5,2 | 10 |
| 5,000 | 9,5 |
| 4,7 | 9 |
| 4 | 8 |
| 7 | 3,5 |
| 6 | 2,6 |

Il est également entendu que ce dispositif et ce procédé, bien que décrits pour un seul essieu, peuvent être adaptés sur tous les essieux du véhicule de manière à avoir une information particulièrement complète.

## Revendications

1. Procédé de mesure de la charge à l'essieu pour des véhicules du type comportant une suspension hydraulique ou pneumatique reliant le châssis à l'essieu (3) et dans laquelle existent des éléments (1) tels que des coussins d'air dont la pression interne varie en fonction de la force d'appui du châssis sur l'essieu,
caractérisé en ce qu'on capte la pression régnant à l'intérieur d'au moins deux éléments (1) de la suspension disposés au voisinage des extrémités respectives de l'essieu (3), en ce qu'on mesure les pressions individuelles (P₁, P₂), et en ce qu'on traduit les valeurs de pression individuelle et la pression moyenne en un poids correspondant d'une part à la charge aux extrémités de l'essieu (3), d'autre part à la charge totale à l'essieu.

2. Procédé selon la revendication 1,
caractérisé en ce qu'on affiche directement les pressions mesurées de préférence au niveau du tableau de bord du véhicule et en ce qu'on détermine le poids correspondant aux extrémités de l'essieu ou la charge totale à l'essieu par l'intermédiaire d'un tableau de correspondance.

3. Procédé selon l'une des revendications 1 et 2,
caractérisé en ce qu'on convertit les pressions mesurées en poids au moyen d'un calculateur et en ce qu'on affiche directement les poids correspondant à la charge aux extrémités de l'essieu et la charge totale à l'essieu de préférence au niveau du tableau de bord du véhicule.

4. Dispositif pour la mise en oeuvre du procédé conforme aux revendications 1 à 3,
caractérisé en ce qu'il comprend des moyens de captation de la pression régnant dans au moins deux éléments à pression interne variable de la suspension hydraulique ou pneumatique, des moyens de mesure des pressions captées (5), des moyens de traduction en poids des pressions individuelles et de la pression moyenne mesurées.

5. Dispositif selon la revendication 4,
caractérisé en ce que les moyens de captation de la pression sont constitués par un branchement direct de l'élément (1) à pression interne variable de la suspension sur le moyen d'affichage (5), le nombre d'entrées du dispositif d'affichage étant égal au nombre de pressions détectées.

6. Dispositif selon l'une des revendications 4 et 5,
caractérisé en ce que le moyen de mesure (5) est un manomètre.

7. Dispositif selon l'une des revendications 4 et 5,
caractérisé en ce que les moyens de traduction de la pression en poids sont constitués par des convertisseurs électroniques de la pression en poids et par des moyens d'affichage du poids calculé.

8. Dispositif selon l'une des revendications 4 à 7,
caractérisé en ce que les moyens de traduction de la pression en poids sont constitués par des moyens d'affichage de la pression et par un tableau comparatif pression/poids.

9. Dispositif selon l'une des revendications 4 à 8,
caractérisé en ce que les moyens d'affichage sont disposés au niveau du tableau de bord du véhicule.
